# EUROPEAN PATENT SPECIFICATION

(11) **EP 1 958 859 B1**
(45) Date of publication and mention of the grant of the patent: **25.05.2011**
(21) Application number: 08250499.4
(22) Date of filing: 12.02.2008
(51) Int. Cl.: B62K 11/00, B62H 5/00, B60R 25/00

(54) **Vehicle with authentication**
Fahrzeug mit Authentifizierung
Véhicule avec autentification

(30) Priority: 13.02.2007 JP 2007032709
(43) Date of publication of application: 20.08.2008
(73) Proprietor: Yamaha Hatsudoki Kabushiki Kaisha, Shizuoka-ken Shizuoka 438-8501 (JP)
(72) Inventor: Yamamoto, Yoshiaki c/o Yamaha Hatsudoki Kabushiki Kaisha, Iwata-shi, Shizuoka-ken 438-8501 (JP); Shimokawa, Hiroshi c/o Yamaha Hatsudoki Kabushiki Kaisha, Iwata-shi, Shizuoka-ken 438-8501 (JP); Nakamura, Takuya c/o Yamaha Hatsudoki Kabushiki Kaisha, Iwata-shi, Shizuoka-ken 438-8501 (JP)
(74) Representative: Lamb, Martin John Carstairs

(56) References cited:
- EP-A- 1 445 180
- EP-A- 1 886 884
- WO-A-02/29734

## Description

### FIELD OF THE INVENTION

The present invention relates to a vehicle, and in particular to a scooter type vehicle.

### BACKGROUND TO THE INVENTION

Prior art document JP-A-2006-306136 discloses a conventional scooter type vehicle. With such a scooter type vehicle, a steering shaft is supported on a head pipe of a body frame to be able to turn, and a steering handle is fixed to an upper end of the steering shaft. Also, a periphery of the steering shaft is covered by a cover. The cover includes a front cover positioned on the front of a vehicle and an inner cover integral with the front cover on a rear side of the vehicle relative to the front cover.

Also, a seat is arranged toward the vehicle rear relative to the cover and a footboard is arranged between the cover and the seat. The inner cover includes an upright wall surface extending upwardly from the footboard and an upper top surface extending toward the front of the vehicle from an upper edge of the upright wall surface to face upwardly of the vehicle. The inner cover is formed with a drawer type control box. The control box is fixed to the inner cover by a control box fixation device.

The footboard includes a projection disposed centrally in a vehicle width direction to project upwardly of the vehicle and a fuel tank is accommodated in the projection. A fuel supply port of the fuel tank is opened and closed by a fuel cap. A fuel lid for covering the fuel cap is provided on the footboard and the fuel lid is supported to enable a rear end thereof to turn about a fulcrum. A front end of the fuel lid is fixed to the footboard by a fuel lid fixation device.

The seat is supported on a vehicle body to enable a front end thereof to turn about a fulcrum. A seat fixation device for fixation of a rear end of the seat to a vehicle body is provided between the vehicle body and the rear end of the seat.

Also, the conventional scooter type vehicle as described in the prior art comprises an authentication circuit, which communicates with a card key to authenticate a legal owner, and a start switch, which starts up the authentication circuit. The card key, the authentication circuit, the start switch, etc. constitute a so-called smart key system. The card key is carried by a legal owner or user. The authentication circuit and the start switch are provided on the scooter type vehicle. The start switch is arranged on an upright wall surface of the inner cover and is of a knob-type, in which a knob may be rotated to an ON position, an OFF position, a LOCK position, or an IGNITION position.

Also, a control box opener and a seat opener are arranged below the start switch on the upright wall surface of the inner cover. The control box opener serves to release locking by the control box fixation device to put the control box in a drawable state. The seat opener serves to release locking by the seat fixation device to put the seat in a state of enabling turning about a fulcrum. Also, the inner cover is provided in a control box with a fuel lid opener. When the fuel lid opener is operated, locking by the fuel lid fixation device is released and the fuel lid is put in a state of enabling turning about a fulcrum.

With the scooter type vehicle constructed in the manner described above, the start switch is first operated whereby authentication is made between the card key carried by a legal owner and the authentication circuit. When authentication is established, it becomes possible to operate the control box opener and the seat opener. By drawing out the control box, it becomes also possible to operate the fuel lid opener. Also, when the knob is turned to the ON position to push an engine start switch, an engine is driven. When the knob is turned to the OFF position or the LOCK position, the engine is stopped. On the other hand, when the engine is stopped and a legal owner carries the card key to a location remote from the scooter type vehicle, the authentication circuit is suspended. Thereby, it becomes impossible to operate the control box opener, the seat opener, and the fuel lid opener. When the knob is turned to the LOCK position, a handle is locked.

Such a conventional arrangement as described above may also be identified by "Honda/bike/forza/main equipment/Honda smart card system", [online], Honda Giken Kogyo Kabushiki Kaisha, [search on 7th of February, 2007] Internet <URL:http://www.honda.co.jp/motor-lineup/forza/utility/>

With the scooter type vehicle described above, since the start switch is arranged on the upright wall surface extending upwardly of the footboard, on which a seated rider may place their feet, the rider's feet are liable interfere in operating the start switch, so that operability of the start switch is not favorable. Also, a line of sight between the rider and the start switch may be obscured and may only be visible or obtainable by the rider assuming an alternative position, for example by stooping a little. There therefore exists a problem that it time to start up and stop the authentication circuit. If so, the convenience of the scooter type vehicle mounting thereon a smart key system is adversely affected.

The invention has been thought of in view of the conventional situation and, as a problem being solved thereby, provides a scooter type vehicle, in which a so-called smart key system is further improved in convenience.

### SUMMARY OF THE INVENTION

According to the present invention defined in claim 1, there is provided a vehicle comprising:
a steering shaft;
a cover adapted to cover a periphery of the steering shaft;
a seat arranged toward the rear of the vehicle relative to the cover;
a footboard arranged between the cover and the seat;
an authentication circuit adapted to communicate with a portable device to authenticate a legal owner or user; and
a start switch adapted to start the authentication circuit,
wherein the cover includes an upright wall surface extending upward from the footboard and an upper top surface extending toward the front of a vehicle from an upper edge of the upright wall surface to face upwardly of the vehicle, and
the start switch is arranged on the upper top surface, rearwardly of a handle part of the vehicle.

The steering shaft may be supported on a head pipe and adapted to turn relative to the head pipe. A steering handle may be mounted on an upper portion of the steering shaft.

The start switch comprises a push type switch.

The cover may include a cover body comprising:
a compartment;
a compartment lid adapted to selectively open and close the compartment;
a compartment lid fixation device adapted to selectively fix the compartment lid in a position to close the compartment; and
a compartment lid opener adapted to unlock the compartment lid fixation device to permit the compartment lid to open the compartment.

The compartment lid may be pivotally mounted.

The vehicle may further comprise:
a fuel supply port;
a fuel cap adapted to open and close the fuel supply port;
a fuel lid adapted to selectively cover the fuel cap;
a fuel lid fixation device adapted to selectively fix the fuel lid in a position to cover the fuel cap; and
a fuel lid opener adapted to unlock the fuel lid to permit the fuel lid to uncover the fuel cap.

The fuel lid may be pivotally mounted.

The seat may be pivotally mounted on a vehicle body. The vehicle may further comprise:
a seat fixation device adapted to selectively fix the seat relative to the vehicle body; and
a seat opener adapted to selectively unlock the seat fixation device to permit the seat to pivot relative to the vehicle body.

The compartment lid opener may be arranged in a position close to the start switch on the upper top surface.

The fuel lid opener may be arranged in a position close to the start switch on the upper top surface.

The seat opener may be arranged in a position close to the start switch on the upper top surface.

The compartment lid opener and the fuel lid opener may be arranged on the left and right of the start switch.

The compartment lid opener and the seat opener may be arranged on the left and right of the start switch.

At least two of the compartment lid opener, the fuel lid opener, and the seat opener may comprise a single button adapted to be operated in accordance with different periods of depressing.

The start switch may be positioned centrally in a vehicle width direction.

The upper top surface may comprise:
a middle surface positioned centrally in the vehicle width direction;
a right surface positioned on the right of the middle surface;
a left surface positioned on the left of the middle surface;
a right, upper bulged portion formed between the middle surface and the right surface and which bulges upwardly and longitudinally of the vehicle; and
a left, upper bulged portion formed between the middle surface and the left surface and which bulges upwardly and longitudinally of the vehicle,
wherein the start switch is arranged on the middle surface.

The compartment lid opener may be arranged on the middle surface.

The fuel lid opener may be arranged on the middle surface.

The seat opener may be arranged on the middle surface.

The upper top surface may be inclined to become low toward the rear of the vehicle.

The upright wall surface may be inclined so that a lower portion thereof is positioned toward the front of the vehicle relative to an upper portion thereof.

A scooter type vehicle according to the invention comprises a steering shaft supported on a head pipe to be able to turn, a steering handle fixed to an upper end of the steering shaft, a cover, which covers a periphery of the steering shaft, a seat arranged toward the rear of a vehicle relative to the cover, a footboard arranged between the cover and the seat, an authentication circuit, which communicates with a portable equipment to authenticate a legal owner, and a start switch, which starts up the authentication circuit, and the cover includes an upright wall surface extending upward from the footboard and an upper top surface extending toward the front of a vehicle from an upper edge of the upright wall surface to face upwardly of the vehicle, and the start switch is arranged on the upper top surface.

With the scooter type vehicle, since the start switch is arranged not on the upright wall surface but on the upper top surface extending toward the front of a vehicle from an upper edge of the upright wall surface to face upwardly of the vehicle, rider's legs do not get in the way in operating the start switch, so that the start switch is favorable in operability. Also, since a rider on the seat can look straight at the start switch on the upper top surface without stooping, it is possible to quickly start up and stop the authentication circuit.

Accordingly, the scooter type vehicle according to the invention enables improving a smart key system in facility.

In the scooter type vehicle according to the invention, the start switch is of a push type. Since the start switch on the upper top surface is of a push type, a rider can easily push the start switch with a finger or the like while visually seeing it, so that a further favorable operability can exhibit itself.

In the scooter type vehicle according to the invention, the cover can include a cover body formed with a compartment, which has an insertion port, a compartment lid, which covers the insertion port and has one end thereof supported on the cover body to be able to turn about a fulcrum, and a compartment lid fixation device, which fixes the other end of the compartment lid to the cover body. In this case, the scooter type vehicle can comprises a compartment lid opener, which releases locking by the compartment lid fixation device and enables the compartment lid to turn about the fulcrum.

The compartment lid opener is preferably arranged in a position close to the start switch on the upper top surface. In this case, since a rider can also look straight at the compartment lid opener, it is possible to quickly release locking by the compartment lid fixation device. The compartment lid opener is also preferably of a push type. In this case, a rider is liable to push the compartment lid opener with a finger or the like while visually seeing it, so that a further favorable operability can exhibit itself.

The scooter type vehicle according to the invention can comprise a fuel supply port, a fuel cap, which opens and closes the fuel supply port, a fuel lid, which covers the fuel cap and has an end thereof supported on the vehicle body to be able to turn about a fulcrum, a fuel lid fixation device, which fixes the other end of the fuel lid to the vehicle body, and a fuel lid opener, which releases locking by the fuel lid fixation device and puts the fuel lid in a state of being able to turn about the fulcrum.

The fuel lid opener is preferably arranged in a position close to the start switch on the upper top surface. In this case, since a rider can also look straight at the fuel lid opener, it is possible to quickly release locking by the fuel lid fixation device. The fuel lid opener is also preferably of a push type. In this case, a rider is liable to push the fuel lid opener with a finger or the like while visually seeing it, so that a further favorable operability can exhibit itself.

In the scooter type vehicle according to the invention, the seat can have an end thereof supported on the vehicle body to be able to turn about a fulcrum. In this case, the scooter type vehicle can comprise a seat fixation device, which fixes the other end of the seat to the vehicle body, and a seat opener, which releases locking by the seat fixation device and puts the seat in a state of being able to turn about the fulcrum.

The seat opener is preferably arranged in a position close to the start switch on the upper top surface. In this case, since a rider can also look straight at the seat opener, it is possible to quickly release locking by the seat fixation device. The seat opener is also preferably of a push type. In this case, a rider is liable to push the seat opener with a finger or the like while visually seeing it, so that a further favorable operability can exhibit itself.

At least two of the compartment lid opener, the fuel lid opener, and the seat opener can be realized by a single button, function of which is divided properly depending upon a difference in time of push. Thereby, although being positioned close to one another, respective operating elements being liable to be increased in number can be arranged in a compact manner without becoming complex.

The start switch is preferably positioned centrally in a vehicle width direction. The reason for this is that a rider can pay most attention to a center of the upper top surface in the vehicle width direction and so can quickly start up and stop the authentication circuit.

The upper top surface of the cover can comprise a middle surface positioned centrally in the vehicle width direction, a right surface positioned on the right of the middle surface, a left surface positioned on the left of the middle surface, a right, upper bulged portion, which is formed between the middle surface and the right surface, bulges upwardly of the vehicle, and extends in a longitudinal direction of the vehicle, and a left, upper bulged portion, which is formed between the middle surface and the left surface, bulges upwardly of the vehicle, and extends in the longitudinal direction of the vehicle. In this case, the right, upper bulged portion and the left, upper bulged portion can prevent rainwater, etc. on the upper top surface of the cover from flowing to the middle surface from the right surface and from flowing to the middle surface from the left surface in traveling, thus enabling preventing rainwater, etc. from being splashed on a rider.

The start switch is preferably arranged on the middle surface. The compartment lid opener, the fuel lid opener, and/or the seat opener is also preferably arranged on the middle surface. Since the middle surface is made hard by the right, upper bulged portion and the left, upper bulged portion on both sides thereof to be exposed to rainwater, etc., the start switch or the like is made hard to get out of order due to rainwater, etc.

The upper top surface of the cover is preferably inclined to become low toward the vehicle rear. In this case, rainwater, etc. are hard to remain on the upper top surface in non-traveling and in traveling at low speed, so that the start switch, etc. are made hard to get out of order due to rainwater, etc. Also, a rider on the seat is liable to look straight at the start switch, etc. and so can quickly operate the start switch, etc.

The upright wall surface of the cover is preferably inclined so that a lower portion thereof is positioned toward the vehicle front relative to an upper portion thereof. In this case, a rider affords to put feet on the footboard and can operate the start switch, etc. in this state, so that the effect described above becomes conspicuous.

### BRIEF DESCRIPTION OF THE DRAWINGS

These and other aspects of the present invention will now be described, by way of example only, with reference to the accompanying drawings, in which:
Fig. 1 is a side view showing a scooter according to an embodiment of the present invention;
Fig. 2 is a side view showing a state, in which the scooter according to the embodiment is a little simplified and a seat, etc. are lifted;
Fig. 3 is a side view showing, in enlarged scale, a front of the scooter according to the embodiment;
Fig. 4 is a plan view showing, in enlarged scale, the front of the scooter according to the embodiment;
Fig. 5 is a rear view showing, in enlarged scale, the front of the scooter according to the embodiment;
Fig. 6 is a rear view showing, in enlarged scale, the front of the scooter according to the embodiment and a state, in which a left compartment, etc. are opened; and
Fig. 7 is a block diagram related to the scooter according to the embodiment and illustrating a smart key system.

### DETAILED DESCRIPTION OF THE DRAWINGS

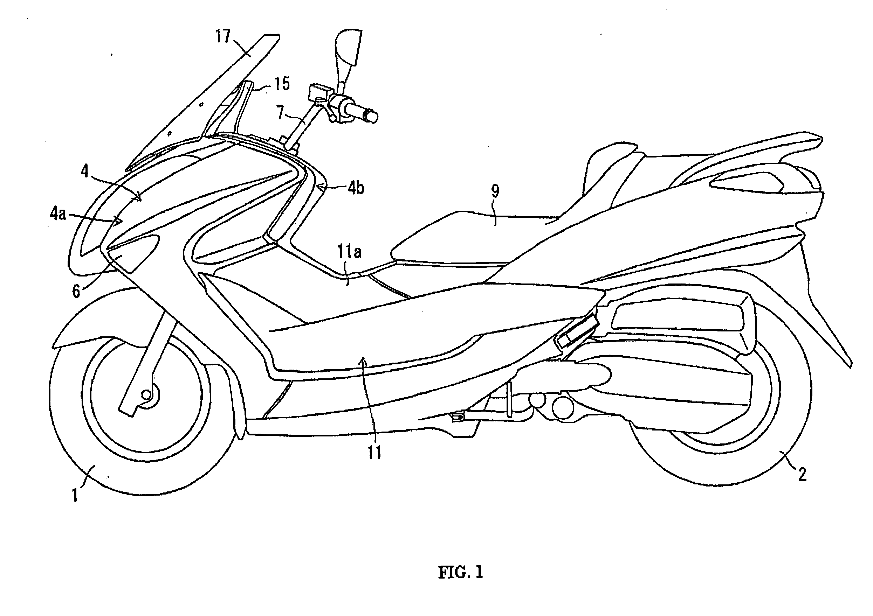

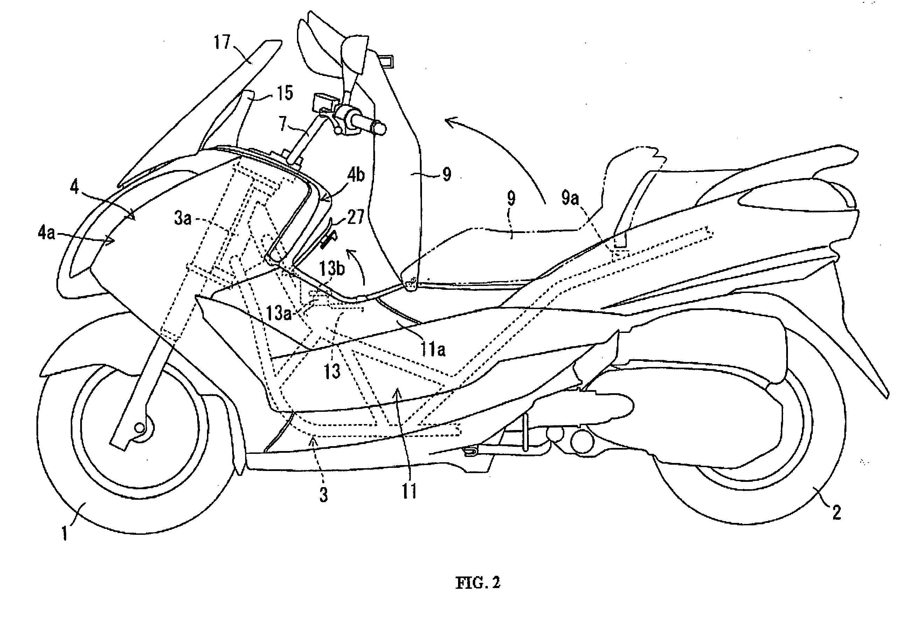

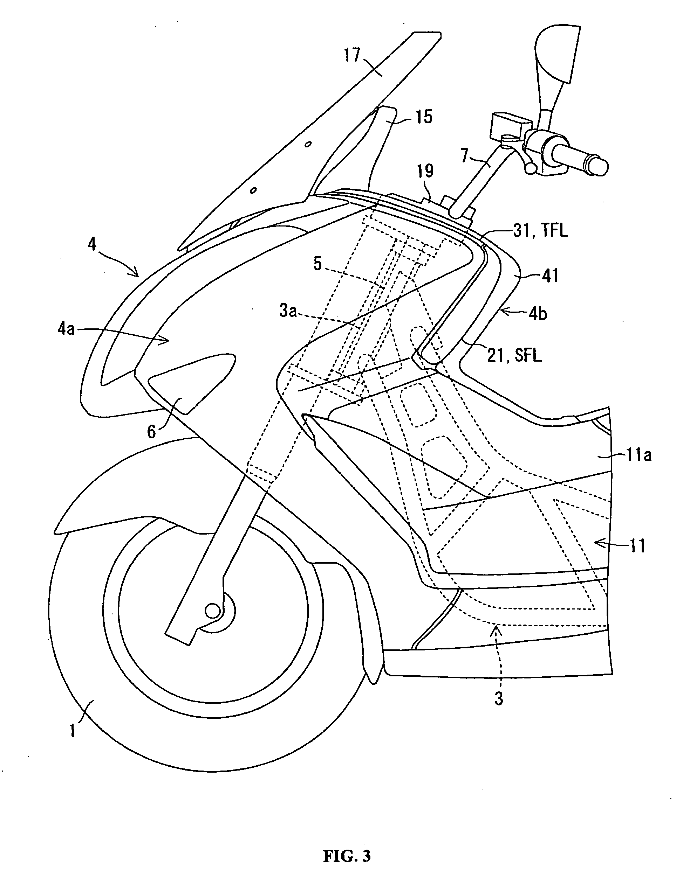

A vehicle according to an embodiment of the present invention is provided in the form of a large-sized scooter having a displacement of 250 cc. As shown in Figs. 1 and 2, the scooter comprises a body frame 3, which supports a front wheel 1, a rear wheel 2, an engine (not shown), etc., and a cover 4 is provided around a head pipe 3a of the body frame 3. The cover 4 is fixed to the body frame 3 through a bracket (not shown). As shown in Fig. 3, a steering shaft 5 is supported in the head pipe 3a to be able to turn, and a steering handle 7 is fixed to an upper end of the steering shaft 3 through a handle post 19.

The cover 4 includes a front cover 4a positioned on the front of the vehicle and an inner cover 4b integral with the front cover 4a toward the rear of the vehicle relative to the front cover 4a. The front cover 4a and the inner cover 4b cover a periphery of the steering shaft 5. In this case, "cover a periphery" includes the case where the vicinity of an axially upper portion of the steering shaft 5 or the vicinity of an axially lower portion thereof is covered.

The front cover 4a comprises a base material made of FRP, the surfaces of which are coated. A headlight 6 is provided on a front portion of the front cover 4a. Also, a meter visor 15 positioned toward the front of the vehicle relative to the steering handle 7 is fixed to an upper portion of the front cover 4a, and a windshield screen 17 is fixed to a front surface of the meter visor 15.

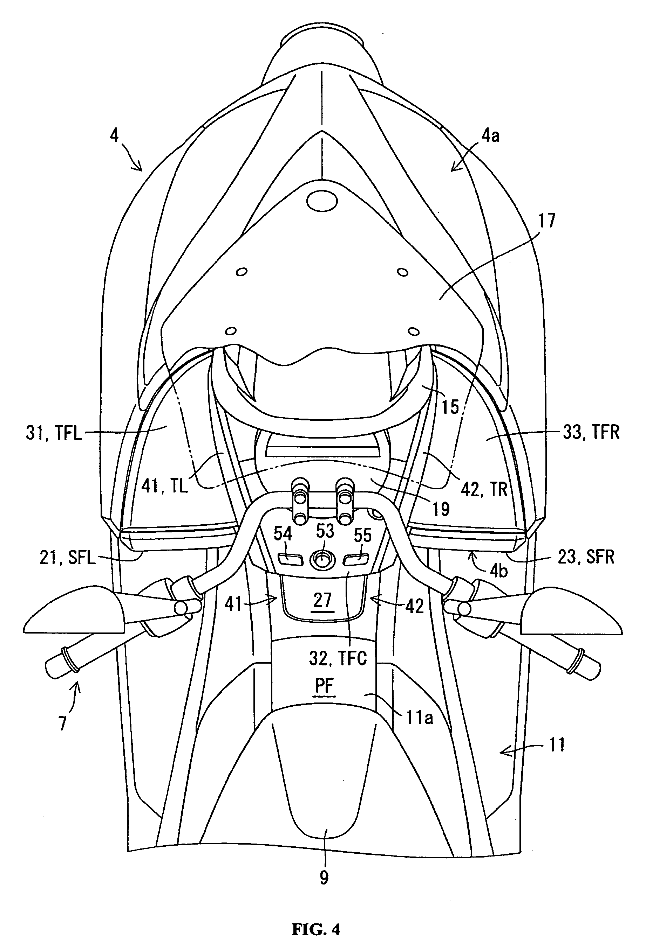

Also, as shown in Fig. 1, a seat 9 is arranged toward the rear of the vehicle relative to the inner cover 4b, and a footboard 11 is arranged between the inner cover 4b and the seat 9. The footboard 11 includes a projection 11a disposed centrally in the vehicle width direction to project upwardly of the vehicle. As shown in Fig. 4, the projection 11a of the footboard 11 includes a lower top surface PF extending in a longitudinal direction of the vehicle to face upwardly of the vehicle.

As shown in Figs. 4 to 6, the inner cover 4b includes an inner panel 20 as a cover body, which extends upwardly of the footboard 11, a right compartment lid 23 provided on the right of the inner panel 20 to be able to swing, a middle compartment lid 22 provided centrally of the inner panel 20 to be able to swing, and a left compartment lid 21 provided on the left of the inner panel 20 to be able to swing. The right compartment lid 23 and the left compartment lid 21 comprise a base material made of a resin, the surfaces of which are coated in the same color as that of the front cover 4a, and the middle compartment lid 22 is made of a resin and is not coated. A surface of the right compartment lid 23 defines a right surface SFR, a surface of the middle compartment lid 22 defines a central surface SFC, and a surface of the left compartment lid 21 defines a left surface SFL.

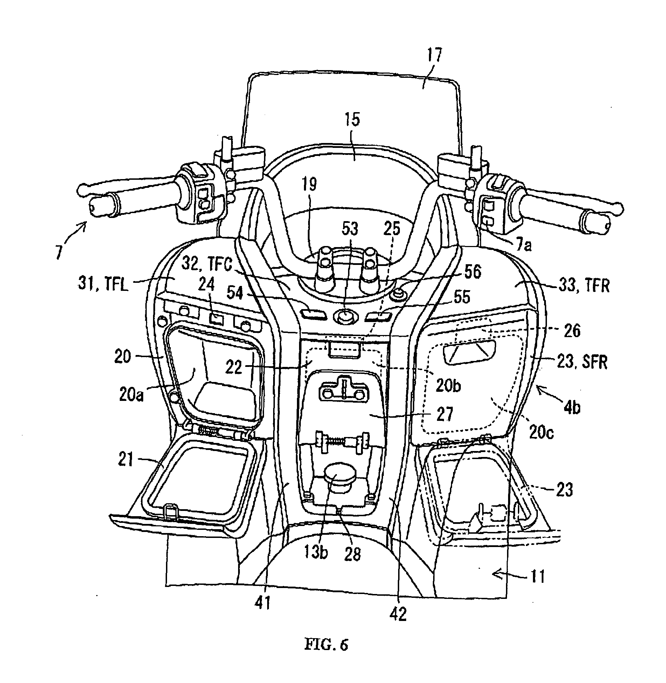

As shown in Fig. 6, a compartment 20c having an insertion port, which opens towards a rider is formed on the right of the inner panel 20, a similar compartment 20b is formed centrally of the inner panel 20, and a similar compartment 20a is formed on the left of the inner panel 20. Lower ends of the right compartment lid 23, the middle compartment lid 22, and the left compartment lid 21 are supported at lower ends of the respective compartments 20c, 20b, 20a to be able to turn about respective fulcrums. Also, compartment lid fixation devices 26, 25, 24 for fixation of respective upper ends of the right compartment lid 23, the middle compartment lid 22, or the left compartment lid 21 are provided at upper ends of the respective compartments 20c, 20b, 20a.

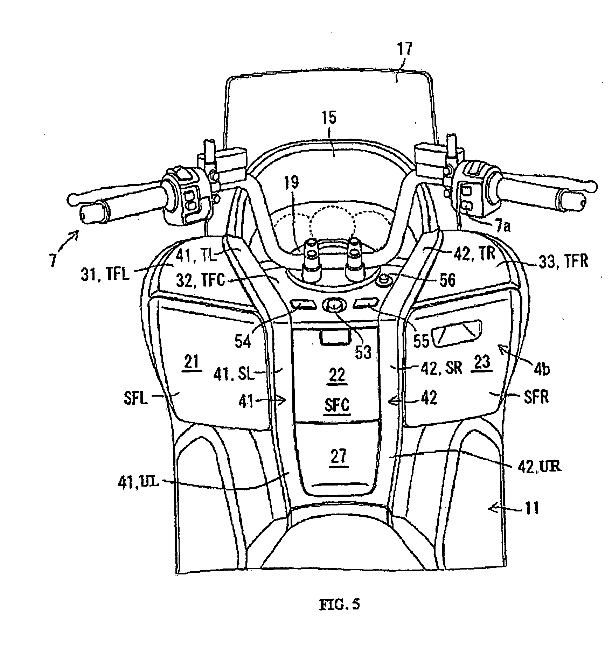

As shown in Figs. 5 and 6, the inner cover 4b includes a right, upper panel 33 extending toward the vehicle front from a right, upper edge of the inner panel 20 to face upwardly of the vehicle. The inner cover 4b also includes a middle, upper panel 32 extending toward the vehicle front from a middle, upper edge of the inner panel 20 to face upwardly of the vehicle. The inner cover 4b further includes a left, upper panel 31 extending toward the vehicle front from a left, upper edge of the inner panel 20 to face upwardly of the vehicle. The right, upper panel 33 and the left, upper panel 31 comprise a base material made of a resin, the surfaces of which are coated in the same color as that of the front cover 4a, and the middle, upper panel 32 is made of a resin and not coated. The right, upper panel 33 and the left, upper panel 31 afford to mount an audio-speaker, etc. thereto. A surface of the right, upper panel 33 defines a right surface TFR, a surface of the middle, upper panel 32 defines a central surface TFC, and a surface of the left, upper panel 31 defines a left surface TFL.

Also, the inner cover 4b includes a right partition member 42 and a left partition member 41. The right partition member 42 extends between the right compartment lid 23 and the middle compartment lid 22 from between the right, upper panel 33 and the middle, upper panel 32 to extend to the right side of the lower top surface PF of the projection 11a of the footboard 11. The left partition member 41 extends between the left compartment lid 21 and the middle compartment lid 22 from between the left, upper panel 31 and the middle, upper panel 32 to extend to the left side of the lower top surface PF of the projection 11a of the footboard 11. The right partition member 42 and the left partition member 41 approach each other on a front side of the seat 9 to be connected to each other.

The right partition member 42 positioned between the right surface TFR of the right, upper panel 33 and the central surface TFC of the middle, upper panel 32 corresponds to a right, upper bulged portion 42TR, which bulges upwardly of the vehicle and extends in the longitudinal direction of the vehicle. Also, the left partition member 41 positioned between the central surface TFC of the middle, upper panel 32 and the left surface TFL of the left, upper panel 31 corresponds to a left, upper bulged portion 41TL, which bulges upwardly of the vehicle and extends in the longitudinal direction of the vehicle. The right partition member 42 and the left partition member 41 abut against both left and right ends of the meter visor 15.

That is, an upper top surface TF extending in the longitudinal direction of the vehicle to face upwardly of the vehicle comprises a right surface TFR, a middle surface TFC, a left surface TFL, the right, upper bulged portion 42TR, and the left, upper bulged portion 41TL. The upper top surface TF is inclined to become lower toward the rear of the vehicle. Here, "face upwardly of the vehicle" includes the case where a top surface is horizontal and also includes the case where a top surface is inclined to the horizontal as in the embodiment.

The right partition member 42 positioned between the right surface SFR of the right compartment lid 23 and the central surface SFC of the middle compartment lid 22 corresponds to a right, middle bulged portion 42SR, which bulges toward the rear of the vehicle and extends downwardly of the vehicle. Also, the left partition member 41 positioned between the central surface SFC of the middle compartment lid 22 and the left surface SFL of the left compartment lid 21 corresponds to a left, middle bulged portion 41SL, which bulges toward the rear of the vehicle and extends downwardly of the vehicle. Since the right partition member 42 and the left partition member 41 are contiguous to each other toward the rear of the vehicle, the right, middle bulged portion 42SR is contiguous to the right, upper bulged portion 42TR and the left, middle bulged portion 41SL is contiguous to the left, upper bulged portion 41TL.

That is, an upright wall surface SF extending downwardly of the vehicle from an edge of the upper top surface TF toward the vehicle rear is composed of the right surface SFR, the central surface SFC, the left surface SFL, the right, middle bulged portion 42SR, and the left, middle bulged portion 41SL. As shown in Fig. 3, the upright wall surface SF is inclined so that a lower portion thereof is positioned toward the vehicle front relative to an upper portion thereof . Here, "extending downwardly of the vehicle" includes the case of extending in a vertical direction and also includes the case of being inclined to a vertical plane as in the embodiment.

As shown in Fig. 4, the right partition member 42 is positioned on the right of the lower top surface PF of the footboard 11 and the left partition member 41 is positioned on the left of the lower top surface PF. The right partition member 42 on the projection 11a corresponds to a right, lower bulged portion 42UR, which bulges upwardly of the vehicle and extends in the longitudinal direction of the vehicle. Also, the left partition member 41 on the projection 11a corresponds to a left, lower bulged portion 41UL, which bulges upwardly of the vehicle and extends in the longitudinal direction of the vehicle. Since the right partition member 42 and the left partition member 41 are contiguous to each other toward the vehicle rear, the right, lower bulged portion 42UR is contiguous to the right, middle bulged portion 42SR and the left, lower bulged portion 41UL is contiguous to the left, middle bulged portion 41SL.

As shown in Fig. 2, a fuel tank 13 is accommodated in the projection 11a of the footboard 11. A fuel supply port 13a of the fuel tank 13 is opened and closed by a fuel cap 13b. As shown in Fig. 6, a fuel lid 27 for covering the fuel cap 13b is provided on the projection 11a of the footboard 11 and the fuel lid 27 is supported to make a front end thereof able to turn about a fulcrum. A rear end of the fuel lid 27 is fixed to the footboard 11 by a fuel lid fixation device 28.

As shown in Fig. 2, the seat 9 is supported on a vehicle body to make a front end thereof able to turn about a fulcrum and the seat 9 is caused to swing forward whereby a storage box for storage of a helmet or the like can be opened. A seat fixation device 9a for fixation of a rear end of the seat 9 to the body frame 3 is provided between the body frame 3 and the rear end of the seat 9.

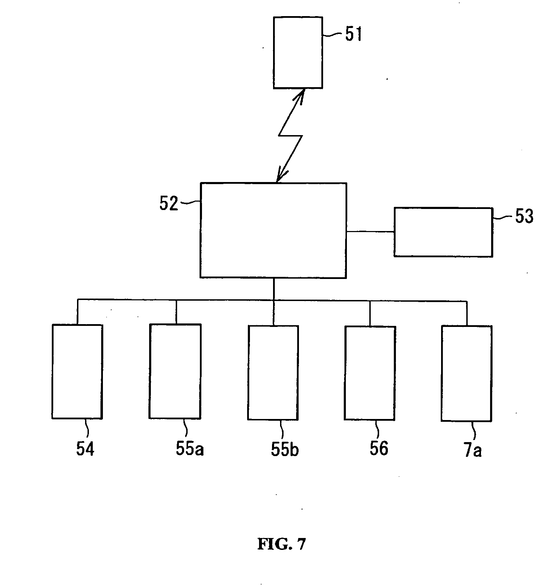

Also, as shown in Fig. 7, the scooter comprises an authentication circuit 52, which communicates with a card key 51 as a portable equipment to authenticate a legal owner or user, and a start switch 53, which starts up the authentication circuit 52. The card key 51, the authentication circuit 52, and the start switch 53 constitute a so-called smart key system. A legal owner carries the card key 51. The authentication circuit 52 is provided rearwardly of the head pipe 3a in the cover 4 on the scooter.

As shown in Figs. 3 and 5, the steering shaft 5 extends through the middle, upper panel 32 of the cover 4 to be fixed to the handle post 19 on the middle, upper panel 32. As shown in Figs. 4 to 6, the start switch 53 is arranged rearwardly of the handle post 19 on the middle, upper panel 32 of the scooter. The start switch 53 is of a push type.

As shown in Fig. 5, a starter-motor switch 7a is provided close to a grip of the steering handle 7. Also, as shown in Figs. 4 to 6, a push type compartment lid opener 54 is arranged just on the left of the start switch 53. A push type combined use opener 55 is arranged just on the right of the start switch 53. The combined use opener 55 functions as a fuel lid opener 55a when depressed for a short period of time and functions as a seat opener 55b when depressed for a long period of time. Also, a push type lock switch 56 is arranged on the right of the handle post 19. The authentication circuit 52 shown in Fig. 7 is connected electrically to the starter-motor switch 7a, the compartment lid opener 54, the fuel lid opener 55a, the seat opener 55b, and the lock switch 56.

With the scooter constructed in the manner described above, when the authentication circuit 52 is started up by depressing the start switch 53 and authentication is established between the card key 51 held by a legal owner and the authentication circuit 52, an electric source of the vehicle is turned ON. Also, locking of the steering handle 7 is simultaneously released.

At this time, since the start switch 53 on the scooter is arranged on the middle surface TFC of the upper top surface TF, and not on the upright wall surface SF, a rider's legs do not interfere in operating the start switch 53, so that the start switch 53 is located in a position for favorable operability. Also, a rider on the seat 9 can look straight at the start switch 53 on the middle surface TFC without stooping, so that it is possible to quickly start up and stop the authentication circuit 52. In particular, since the scooter adopts the push type start switch 53, a rider can easily push the start switch 53 with a finger or the like while visually seeing it, so that a further favorable operability can exhibit itself.

By pushing the compartment lid opener 54 in a state, in which the authentication circuit 52 is started up, the compartment lid fixation device 24 is put in an unlocked state and the left compartment lid 21 swings downward as shown in Fig. 6. At this time, since the compartment lid opener 54 is arranged just on the left of the start switch 53 on the middle surface TFC, it is possible to quickly release locking, so that a further favorable operability can exhibit itself. Thereby, the compartment 20a is opened. In addition, since locking of the compartment lid fixation devices 25, 26 can be freely released, the compartments 20b, 20c can be opened freely.

By depressing the combined use opener 55 for a long period of time in a state, in which the authentication circuit 52 is started up, the fuel lid fixation device 28 is put in an unlocked state and the fuel lid 27 swings upward as shown in Figs. 2 and 6. At this time, since the combined use opener 55 is arranged just on the right of the start switch 53 on the middle surface TFC, it is possible to quickly release locking, so that a further favorable operability can exhibit itself. Thereby, it becomes possible to perform fueling to the fuel tank 13.

By depressing the combined use opener 55 for a short period of time in a state, in which the authentication circuit 52 is started up, the seat fixation device 9a is put in an unlocked state and it is possible to swing the seat 9 upward as shown in Fig. 2. At this time, it is possible to quickly release locking, so that a further favorable operability can exhibit itself. Thereby, it becomes possible to open the storage box.

Here, since the upper top surface TF of the scooter is inclined to become low toward the vehicle rear, a rider on the seat 9 is permitted to look straight at the start switch 53, etc., thus enabling quickly operating the start switch 53, etc. In particular, since the upright wall surface SF is also inclined, a rider affords to put feet on the footboard 11 and operating the start switch 53, etc. in this state, so that the effect described above becomes conspicuous.

Also, with the scooter, the single combined use opener 55 realizes the fuel lid opener 55a and the seat opener 55b, use of which is low in frequency, and its function is divided depending upon that duration, during which push is made, so that the compartment lid opener 54, use of which is high in frequency, is made independent and the number of buttons on the middle surface TFC is decreased whereby a further excellent operability exhibits itself.

By operating the starter-motor switch 7a in a state, in which the authentication circuit 52 is started up, a starter-motor (not shown) is rotated and an engine starts.

When the start switch 53 is pushed for a long period of time, the engine stops, the electric source of the vehicle is turned OFF, and the authentication circuit 52 is stopped. Thereby, even when a person except an owner carrying a regular card key 51 operates the compartment lid opener 54, the combined use opener 55, the starter-motor switch 7a, etc., it is not possible to effectively function them.

Accordingly, the scooter enables improving the smart key system in convenience.

Also, since the scooter adopts the right partition member 42 and the left partition member 41, these members 42, 41 prevent rainwater, etc. on the upper top surface TF of the cover 4 from flowing to the middle surface TFC from the right and left surfaces TFR, TFL in traveling, thus enabling preventing rainwater, etc. from being splashed on a rider.

Further, the possibility of malfunction of the scooter due to rainwater, etc. is minimised since the start switch 53, the compartment lid opener 54, and the combined use opener 55 are arranged on the middle surface TFC, which is made hard by the right partition member 42 and the left partition member 41 to be exposed to rainwater, etc. In particular, since the upper top surface TF is inclined to become low toward the vehicle rear, rainwater, etc. will tend not to reside on the upper top surface TF in non-traveling and in traveling at low speed, so that the start switch 53, etc. are protected from malfunction due to rainwater, etc.

While the invention has been described above on the basis of the embodiment, the invention is not limited to the embodiment but can be appropriately modified within a scope of the appended claims.

For example, the start switch 53 is not limited to a push type but may be of a rotatable knob type. The footboard 11 may not incorporate the projection 11a, which is disposed centrally in the vehicle width direction to project upwardly of the vehicle, but may include a flat surface extending in the vehicle width direction. Orientation of spindles of the respective lids is not limited to the vehicle width direction but may be directed longitudinally or obliquely. "Fixation device" may be either of a mechanical type or an electronic type. The steering handle 7 is not required to be connected directly to the steering shaft 5 but may be mounted thereto through a bracket.

The invention can be made use of for scooters, buggies, snowmobiles, etc.

### Description of Reference Numerals and Signs

- 3a:: head pipe
- 5:: steering shaft
- 7:: steering handle
- 4:: cover
- 9:: seat
- 11:: footboard
- 51:: portable equipment (card key)
- 52:: authentication circuit
- 53:: start switch
- SF:: upright wall surface
- TF:: upper top surface (TFC: middle surface, TFR: right surface, TFL: left surface)
- 20a,: 20b, 20c: compartment
- 20:: cover body (inner panel)
- 21, 22, 23:: compartment lid (21: left compartment lid, 22: middle compartment lid, 23: right compartment lid)
- 24, 25, 26:: compartment lid fixation device
- 54:: compartment lid opener
- 13a:: fuel supply port
- 13b:: fuel cap
- 27:: fuel lid
- 28:: fuel lid fixation device
- 55:: combined use opener (55a: fuel lid opener, 55b: seat opener)
- 9a:: seat fixation device

## Claims

1. A vehicle comprising:
a steering shaft (5);
a cover (4) adapted to cover a periphery of the steering shaft (5);
a seat (9) arranged toward the rear of the vehicle relative to the cover (4);
a footboard (11) arranged between the cover (4) and the seat (9);
an authentication circuit (52) adapted to communicate with a portable device (51) to authenticate a legal owner or user; and
a start switch (53) adapted to start the authentication circuit (52),
wherein the cover (4) includes an upright wall surface (SF) extending upward from the footboard (11) and an upper top surface (TF) extending toward the front of a vehicle from an upper edge of the upright wall surface (SF) to face upwardly of the vehicle,
**characterised in that** the start switch (53) comprises a push type switch and **in that**
the start switch (53) is arranged on the upper top surface (TF), rearwardly of a handle post (19) of the vehicle.

2. The vehicle according to claim 1, **characterised in that** the cover (4) includes a cover body (20) comprising:
a compartment (20a, 20b, 20c);
a compartment lid (21, 22, 23) adapted to selectively open and close the compartment (20a, 20b, 20c);
a compartment lid fixation device (24, 25, 26) adapted to selectively fix the compartment lid (21, 22, 23) in a position to close the compartment (20a, 20b, 20c); and
a compartment lid opener (54) adapted to unlock the compartment lid fixation device (24, 25, 26) to permit the compartment lid (21, 22, 23) to open the compartment (20a, 20b, 20c).

3. The vehicle according to any preceding claim, **characterised in that** it further comprises:
a fuel supply port (13a);
a fuel cap (13b)adapted to open and close the fuel supply port (13a);
a fuel lid (27) adapted to selectively cover the fuel cap (13b) ;
a fuel lid fixation device (28) adapted to selectively fix the fuel lid (27) in a position to cover the fuel cap (13b); and
a fuel lid opener (55a) adapted to unlock the fuel lid (27) to permit the fuel lid (27) to uncover the fuel cap (13b).

4. The vehicle according to any preceding claim, **characterised in that** the seat (9) is pivotally mounted on a vehicle body, and the vehicle further comprises:
a seat fixation device (9a) adapted to selectively fix the seat (9) relative to the vehicle body; and
a seat opener (55b) adapted to selectively unlock the seat fixation device (9a) to permit the seat (9) to pivot relative to the vehicle body.

5. The vehicle according to claim 2, **characterised in that** the compartment lid opener (54) is arranged in a position close to the start switch (53) on the upper top surface (TF).

6. The vehicle according to claim 3, **characterised in that** the fuel lid opener (55a) is arranged in a position close to the start switch (53) on the upper top surface (TF).

7. The vehicle according to claim 4, **characterised in that** the seat opener (55b) is arranged in a position close to the start switch (53) on the upper top surface (TF).

8. The vehicle according to claims 2 and 3, **characterised in that** the compartment lid opener (54) and the fuel lid opener (55a) are arranged on the left and right sides of the start switch (53).

9. The vehicle according to claims 2 and 4, **characterised in that** the compartment lid opener (54) and the seat opener (55b) are arranged on the left and right sides of the start switch (53).

10. The vehicle according to claims 2, 3 and 4, **characterised in that** at least two of the compartment lid opener (54), the fuel lid opener (55a), and the seat opener (55b) comprise a single button (55) adapted to be operated in accordance with different predetermined periods of actuation.

11. The vehicle according to any preceding claim, **characterised in that** start switch (53) is positioned centrally in a vehicle width direction.

12. The vehicle according to any preceding claim, **characterised in that** the upper top surface (TF) comprises:
a middle surface (TFC) positioned centrally in the vehicle width direction;
a right surface (TFR) positioned on the right of the middle surface;
a left surface (TFL) positioned on the left of the middle surface;
a right, upper bulged portion (42TR) formed between the middle surface (TFC) and the right surface (TFR) and which bulges upwardly and longitudinally of the vehicle; and
a left, upper bulged portion (42TL) formed between the middle surface (TFC) and the left surface (TFL) and which bulges upwardly and longitudinally of the vehicle,
wherein the start switch (53) is arranged on the middle surface (TFC).

13. The vehicle according to claim 12, when dependent on claim 2, **characterised in that** the compartment lid opener (54) is arranged on the middle surface (TFC).

14. The vehicle according to claim 12, when dependent on claim 3, **characterised in that** the fuel lid opener (55a) is arranged on the middle surface (TFC).

15. The vehicle according to claim 12, when dependent on claim 4, **characterised in that** the seat opener (55b) is arranged on the middle surface (TFC).

16. The vehicle according to any preceding claim, **characterised in that** the upper top surface (TF) is inclined to become low toward the rear of the vehicle.

17. The vehicle according to any preceding claim, **characterised in that** the upright wall surface (SF) is inclined so that a lower portion thereof is positioned toward the front of the vehicle relative to an upper portion thereof.

## Patentansprüche

1. Fahrzeug, das aufweist:
eine Lenkwelle (5);
eine Verkleidung (4), die ausgebildet ist, um einen Umfang der Lenkwelle (5) zu bedecken;
einen Sitz (9), der in Richtung zur Rückseite des Fahrzeuges relativ zur Verkleidung (4) angeordnet ist;
ein Trittbrett (11), das zwischen der Verkleidung (4) und dem Sitz (9) angeordnet ist;
eine Authentisierungsschaltung (52), die ausgebildet ist, um mit einem tragbaren Gerät (51) eine Verbindung herzustellen, um einen rechtmäßigen Eigentümer oder Benutzer zu authentisieren; und
einen Startschalter (53), der ausgebildet ist, um die Authentisierungsschaltung (52) zu starten,
wobei die Verkleidung (4) eine aufrechtstehende Wandfläche (SF), die sich vom Trittbrett (11) nach oben erstreckt, und eine obere Oberfläche (TF) umfasst, die sich in Richtung der Vorderseite eines Fahrzeuges von einem oberen Rand der aufrechtstehenden Wandfläche (SF) erstreckt, um nach oben vom Fahrzeug aus hin zu liegen,
**dadurch gekennzeichnet, dass** der Startschalter (53) einen Druckschalter aufweist, und **dadurch**, dass
der Startschalter (53) auf der oberen Oberfläche (TF) angeordnet ist, nach hinten von einer Lenksäule (19) des Fahrzeuges.

2. Fahrzeug nach Anspruch 1, **dadurch gekennzeichnet, dass** die Verkleidung (4) einen Verkleidungskörper (20) umfasst, der aufweist:
eine Kammer (20a, 20b, 20c);
einen Kammerdeckel (21, 22, 23), der ausgebildet ist, um die Kammer (20a, 20b, 20c) selektiv zu öffnen und zu schließen;
eine Kammerdeckelbefestigungsvorrichtung (24, 25, 26), die ausgebildet ist, um den Kammerdeckel (21, 22, 23) selektiv in einer Position zu befestigen, um die Kammer (20a, 20b, 20c) zu schließen; und
eine Kammerdeckelöffnungseinrichtung (54), die ausgebildet ist, um die Kammerdeckelbefestigungsvorrichtung (24, 25, 26) zu entriegeln, damit der Kammerdeckel (21, 22, 23) die Kammer (20a, 20b, 20c) öffnen kann.

3. Fahrzeug nach einem der vorhergehenden Ansprüche, **dadurch gekennzeichnet, dass** es außerdem aufweist:
eine Kraftstoffzuführöffhung (13a);
eine Kraftstofflcappe (13b), die ausgebildet ist, um die Kraftstoffzuführöffhung (13a) zu öffnen und zu schließen;
einen Kraftstoffdeckel (27), der ausgebildet ist, um die Kraftstofflcappe (13b) selektiv zu bedecken;
eine Kraftstoffdeckelbefestigungsvorrichtung (28), die ausgebildet ist, um den Kraftstoffdeckel (27) selektiv in einer Position zu befestigen, um die Kraftstoffkappe (13b) zu bedecken; und
eine Kraftstoffdeckelöffnungseinrichtung (55a), die ausgebildet ist, um den Kraftstoffdeckel (27) zu entriegeln, damit der Kraftstoffdeckel (27) die Kraftstoffkappe (13b) freilegen kann.

4. Fahrzeug nach einem der vorhergehenden Ansprüche, **dadurch gekennzeichnet, dass** der Sitz (9) drehbar an einer Fahrzeugkarosserie montiert ist, und dass das Fahrzeug außerdem aufweist:
eine Sitzbefestigungsvorrichtung (9a), die ausgebildet ist, um den Sitz (9) relativ zur Fahrzeugkarosserie selektiv zu befestigen; und
eine Sitzöffnungseinrichtung (55b), die ausgebildet ist, um die Sitzbefestigungsvorrichtung (9a) selektiv zu entriegeln, damit sich der Sitz (9) relativ zur Fahrzeugkarosserie drehen kann.

5. Fahrzeug nach Anspruch 2, **dadurch gekennzeichnet, dass** die Kammerdeckelöffnungseinrichtung (54) in einer Position in der Nähe zum Startschalter (53) auf der oberen Oberfläche (TF) angeordnet ist.

6. Fahrzeug nach Anspruch 3, **dadurch gekennzeichnet, dass** die Kraftstoffdeckelöffnungseinrichtung (55a) in einer Position in der Nähe zum Startschalter (53) auf der oberen Oberfläche (TF) angeordnet ist.

7. Fahrzeug nach Anspruch 4, **dadurch gekennzeichnet, dass** die Sitzöffnungseinrichtung (55b) in einer Position in der Nähe zum Startschalter (53) auf der oberen Oberfläche (TF) angeordnet ist.

8. Fahrzeug nach Anspruch 2 und 3, **dadurch gekennzeichnet, dass** die Kammerdeckelöffnungseinrichtung (54) und die Kraftstoffdeckelöffnungseinrichtung (55a) auf der linken und rechten Seite des Startschalters (53) angeordnet sind.

9. Fahrzeug nach Anspruch 2 und 4, **dadurch gekennzeichnet, dass** die Kammerdeckelöffnungseinrichtung (54) und die Sitzöffnungseinrichtung (55b) auf der linken und rechten Seite des Startschalters (53) angeordnet sind.

10. Fahrzeug nach Anspruch 2, 3 und 4, **dadurch gekennzeichnet, dass** mindestens zwei von Kammerdeckelöffnungseinrichtung (54), Kraftstoffdeckelöffnungseinrichtung (55a) und Sitzöffnungseinrichtung (55b) einen einzelnen Knopf (55) aufweisen, der ausgebildet ist, damit er in Übereinstimmung mit verschiedenen vorgegebenen Betätigungsperioden betätigt wird.

11. Fahrzeug nach einem der vorhergehenden Ansprüche, **dadurch gekennzeichnet, dass** der Startschalter (53) mittig in einer Breitenrichtung des Fahrzeuges positioniert ist.

12. Fahrzeug nach einem der vorhergehenden Ansprüche, **dadurch gekennzeichnet, dass** die obere Oberfläche (TF) aufweist:
eine mittlere Oberfläche (TFC), die mittig in der Breitenrichtung des Fahrzeuges positioniert ist;
eine rechte Oberfläche (TFR), die rechts von der mittleren Oberfläche positioniert ist;
eine linke Oberfläche (TFL), die links von der mittleren Oberfläche positioniert ist;
einen rechten oberen gewölbten Abschnitt (42TR), der zwischen der mittleren Oberfläche (TFC) und der rechten Oberfläche (TFR) ausgebildet ist, und der sich nach oben und in Längsrichtung des Fahrzeuges wölbt; und
einen linken oberen gewölbten Abschnitt (42TL), der zwischen der mittleren Oberfläche (TFC) und der linken Oberfläche (TFL) ausgebildet ist, und der sich nach oben und in Längsrichtung des Fahrzeuges wölbt,
wobei der Startschalter (53) auf der mittleren Oberfläche (TFC) angeordnet ist.

13. Fahrzeug nach Anspruch 12, wenn er vom Anspruch 2 abhängig ist, **dadurch gekennzeichnet, dass** die Kammerdeckelöffnungseinrichtung (54) auf der mittleren Oberfläche (TFC) angeordnet ist.

14. Fahrzeug nach Anspruch 12, wenn er vom Anspruch 3 abhängig ist, **dadurch gekennzeichnet, dass** die Kraftstoffdeckelöffnungseinrichtung (55a) auf der mittleren Oberfläche (TFC) angeordnet ist.

15. Fahrzeug nach Anspruch 12, wenn er vom Anspruch 4 abhängig ist, **dadurch gekennzeichnet, dass** die Sitzöffnungseinrichtung (55b) auf der mittleren Oberfläche (TFC) angeordnet ist.

16. Fahrzeug nach einem der vorhergehenden Ansprüche, **dadurch gekennzeichnet, dass** die obere Oberfläche (TF) geneigt ist, damit sie in Richtung der Rückseite des Fahrzeuges niedrig wird.

17. Fahrzeug nach einem der vorhergehenden Ansprüche, **dadurch gekennzeichnet, dass** die aufrechtstehende Wandfläche (SF) so geneigt ist, dass ein unterer Abschnitt davon in Richtung der Vorderseite des Fahrzeuges relativ zu einem oberen Abschnitt davon positioniert ist.

## Revendications

1. Véhicule, comprenant :
un arbre de direction (5) ;
une enveloppe (4) adaptée pour recouvrir une périphérie de l'arbre de direction (5) ;
un siège (9) agencé vers l'arrière du véhicule par rapport à l'enveloppe (4) ;
un marchepied (11) agencé entre l'enveloppe (4) et le siège (9) ;
un circuit d'authentification (52), adapté pour communiquer avec un dispositif portatif (51) pour authentifier un propriétaire ou un utilisateur légal ; et
un interrupteur de démarrage (53), adapté pour démarrer le circuit d'authentification (52) ;
l'enveloppe (4) englobant une surface de paroi verticale (SF), s'étendant vers le haut à partir du marchepied (11), et une surface supérieure (TF), s'étendant vers l'avant d'un véhicule, à partir d'un bord supérieur de la surface de paroi verticale (SF), pour être orientée vers le haut du véhicule ;
**caractérisé en ce que** l'interrupteur de démarrage (53) comprend un interrupteur du type à bouton-poussoir, et **en ce que**
l'interrupteur de démarrage (53) est agencé sur la surface supérieure (TF), vers l'arrière d'un montant de la poignée (19) du véhicule.

2. Véhicule selon la revendication 1, **caractérisé en ce que** l'enveloppe (4) englobe un corps d'enveloppe (20), comprenant :
un compartiment (20a, 20b, 20c) ;
un couvercle du compartiment (21, 22, 23), adapté pour ouvrir et fermer sélectivement le compartiment (20a, 20b, 20c) ;
un dispositif de fixation du couvercle du compartiment (24, 25, 26), adapté pour fixer sélectivement le couvercle du compartiment (21, 22, 23) dans une position pour fermer le compartiment (20a, 20b, 20c) ; et
un moyen d'ouverture du couvercle du compartiment (54), adapté pour déverrouiller le dispositif de fixation du couvercle du compartiment (24, 25, 26), pour permettre au couvercle du compartiment (21, 22, 23) d'ouvrir le compartiment (20a, 20b, 20c).

3. Véhicule selon l'une quelconque des revendications précédentes, **caractérisé en ce qu'**il comprend en outre :
un orifice d'alimentation en carburant (13a) ;
un bouchon de l'orifice d'alimentation en carburant (13b), adapté pour ouvrir et fermer l'orifice d'alimentation en carburant (13a) ;
un couvercle de l'orifice d'alimentation en carburant (27), adapté pour couvrir sélectivement le bouchon de l'orifice d'alimentation en carburant (13b) ;
un dispositif de fixation du couvercle de l'orifice d'alimentation en carburant (28), adapté pour fixer sélectivement le couvercle de l'orifice d'alimentation en carburant (27) dans une position, afin de couvrir le bouchon de l'orifice d'alimentation en carburant (13b) ; et
un moyen d'ouverture du couvercle de l'orifice d'alimentation en carburant (55a), adapté pour déverrouiller le couvercle de l'orifice d'alimentation en carburant (27), pour permettre au couvercle de l'orifice d'alimentation en carburant (27) de découvrir le bouchon de l'orifice d'alimentation en carburant (13b).

4. Véhicule selon l'une quelconque des revendications précédentes, **caractérisé en ce que** le siège (9) est monté de manière pivotante sur la carrosserie du véhicule, le véhicule comprenant en outre :
un dispositif de fixation du siège (9a), adapté pour fixer sélectivement le siège (9) sur la carrosserie du véhicule ; et
un moyen d'ouverture du siège (55b), adapté pour déverrouiller sélectivement le dispositif de fixation du siège (9a), pour permettre le pivotement du siège (9) par rapport à la carrosserie du véhicule.

5. Véhicule selon la revendication 2, **caractérisé en ce que** le moyen d'ouverture du couvercle du compartiment (54) est agencé dans une position proche de l'interrupteur de démarrage (53) sur la surface supérieure.

6. Véhicule selon la revendication 3, **caractérisé en ce que** le moyen d'ouverture du couvercle de l'orifice d'alimentation en carburant (55a) est agencé dans une position proche de l'interrupteur de démarrage (53) sur la surface supérieure (TF).

7. Véhicule selon la revendication 4, **caractérisé en ce que** le moyen d'ouverture du siège (55b) est agencé dans une position proche de l'interrupteur de démarrage (53) sur la surface supérieure (TF).

8. Véhicule selon les revendications 2 et 3, **caractérisé en ce que** le moyen d'ouverture du couvercle du compartiment (54) et le moyen d'ouverture du couvercle de l'orifice d'alimentation en carburant (55a) sont agencés sur les côtés de gauche et de droite de l'interrupteur de démarrage (53).

9. Véhicule selon les revendications 2 et 4, **caractérisé en ce que** le moyen d'ouverture du couvercle du compartiment (54) et le moyen d'ouverture du siège (55b) sont agencés sur les côtés de gauche et de droite de l'interrupteur de démarrage (53).

10. Véhicule selon les revendications 2, 3 et 4, **caractérisé en ce qu'**au moins deux moyens d'ouverture, le moyen d'ouverture du couvercle du compartiment (54), le moyen d'ouverture du couvercle de l'orifice d'alimentation en carburant (55a) et le moyen d'ouverture du siège (55a), comprennent un seul bouton (55) adapté pour être actionné en fonction de différentes périodes d'actionnement prédéterminées.

11. Véhicule selon l'une quelconque des revendications précédentes, **caractérisé en ce que** l'interrupteur de démarrage (53) est positionné au centre, dans la direction de la largeur du véhicule.

12. Véhicule selon l'une quelconque des revendications précédentes, dans lequel la surface supérieure (TF) comrpend :
une surface médiane (TFC), positionnée au centre dans la direction de la largeur du véhicule ;
une surface de droite (TFR), positionnée sur la droite de la surface médiane ;
une surface de gauche (TFL), positionnée sur la gauche de la surface médiane ;
une partie bombée supérieure de droite (42TR), formée entre la surface médiane (TFC) et la surface de droite (TFR), bombée vers le haut et dans la direction longitudinale du véhicule ;
une partie bombée supérieure de gauche (42TR), formée entre la surface médiane (TFC) et la surface de gauche (TFR), bombée vers le haut et dans la direction longitudinale du véhicule ;
l'interrupteur de démarrage (53) étant agencé sur la surface médiane (TFC).

13. Véhicule selon la revendication 12, dépendant de la revendication 2, **caractérisé en ce que** le moyen d'ouverture du couvercle du compartiment (4) est agencé sur la surface médiane (TFC).

14. Véhicule selon la revendication 12, dépendant de la revendication 3, **caractérisé en ce que** le moyen d'ouverture de l'orifice d'alimentation en carburant (55a) est agencé sur la surface médiane (TFC).

15. Véhicule selon la revendication 12, dépendant de la revendication 4, **caractérisé en ce que** le moyen d'ouverture du siège (55b) est agencé sur la surface médiane (TFC).

16. Véhicule selon l'une quelconque des revendications précédentes, **caractérisé en ce que** la surface supérieure (TF) est inclinée pour s'abaisser en direction de l'arrière du véhicule.

17. Véhicule selon l'une quelconque des revendications précédentes, **caractérisé en ce que** la surface de paroi verticale (SF) est inclinée de sorte qu'une partie inférieure de celle-ci est positionnée vers l'avant du véhicule par rapport à sa partie supérieure.
